**Europäisches Patentamt**

**European Patent Office**

**Office européen des brevets**

(19)

(11) Publication number: **0 194 806**

**A1**

(12) # EUROPEAN PATENT APPLICATION

(21) Application number: **86301565.7**

(22) Date of filing: **05.03.86**

(51) Int. Cl.⁴: **B 62 D 25/16**

(30) Priority: **06.03.85 GB 8505749**
**07.06.85 GB 8514449**

(43) Date of publication of application:
**17.09.86 Bulletin 86/38**

(84) Designated Contracting States:
**AT BE CH DE FR GB IT LI LU NL SE**

(71) Applicant: **Transmod Engineering Limited**
**Unit E Tyson Courtyard**
**Weldon Corby Northants NN18 8AZ(GB)**

(72) Inventor: **Wallace, David Charles**
**Unit E Tyson Courtyard**
**Weldon Corby Northants NN18 8AZ(GB)**

(72) Inventor: **Hughes, Ian Michael**
**34 Michlewell Lane**
**Southfields Estate Northampton(GB)**

(74) Representative: **Boydell, John Christopher**
**Stevens, Hewlett & Perkins 5 Quality Court Chancery Lane**
**London, WC2A 1HZ(GB)**

(54) **Improvements relating to vehicle spray suppression equipment.**

(57) A device for fixing spray suppression equipment to motor vehicles. The device comprising a rectangular frame (5) to which are clamped – at adjustable positions – a pair of cross members (12,13). During fitting, the cross members are adjusted as shown by the arrows so that they lie directly beneath suitable cross bearer beams (not shown) on the vehicle chassis and clamping mechanisms (14) are used to clamp the frame and cross members to the beams in such a way that the frame can be moved in and out – i.e. in a direction parallel to the beams – by loosening of the clamping mechanisms. The spray suppression flaps (not shown) are attached to the sides of the frame, as needed, and hang down therefrom.

FIG.2

## "IMPROVEMENTS RELATING TO VEHICLE SPRAY SUPPRESSION EQUIPMENT"

This invention relates to vehicle spray suppression equipment and in particular to a fixing device for such equipment.

Vehicle spray suppression equipment is used to reduce spray ejected from vehicle wheels when driving in wet conditions.  This is a particular problem in large vehicle such as lorries and recent legislation in the U.K. means that all such vehicles, including their trailers, must be fitted with spray suppression equipment which meets British Standard AU200, Part 1, 1984.

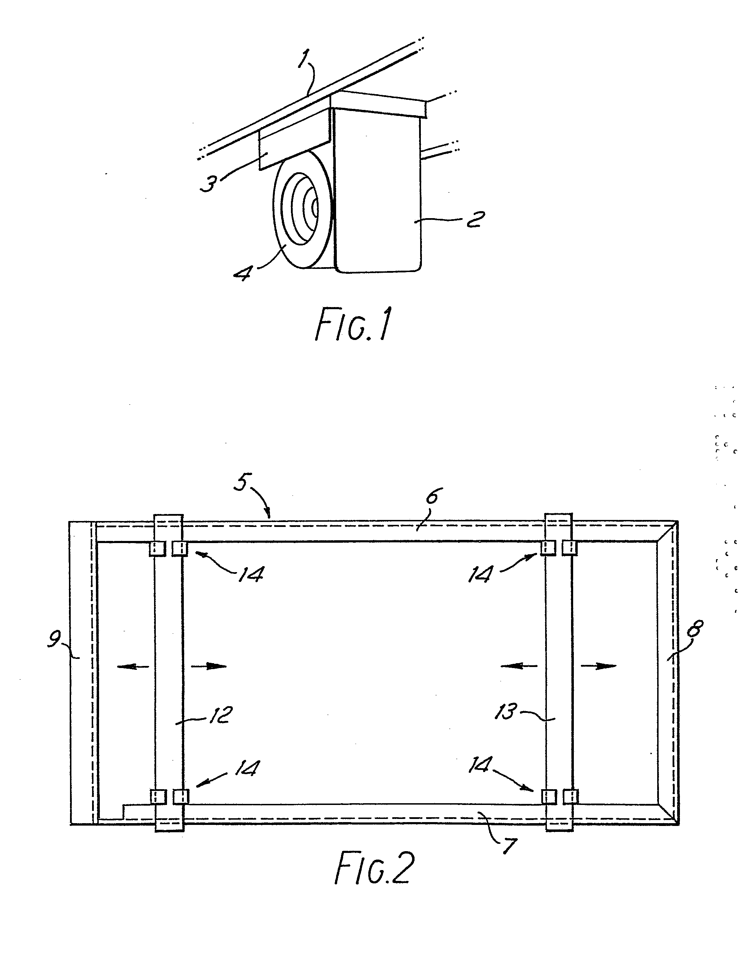

One type of spray suppression equipment comprises, for each road wheel, a pair of flaps made of suitable material, one of which hangs approximately vertically behind the wheel to restrain spray flung backwards and the other of which, called the valance, hangs down at the side of the wheel to restrain spray flung to the side.  A typical arrangement is illustrated diagrammatically in Figure 1 in which reference 1 indicates the floor of the lorry and references 2 and 3 the rear flap and valance respectively protecting a rear road wheel 4.  The valance 3, whilst shown hanging approximately vertically, may in some circumstances be angled outwards in the manner of an awning.

The material used for these flaps is preferably flexible, for example rubber or similar.  However, recent legislation imposing more rigorous requirements in respect of spray suppression have resulted in the development of a number of new materials for this purpose.  One such material which meets the requirements laid down is that sold by Monsanto plc under the trademark CLEAR PASS.

The present invention relates not so much to the material itself as to the manner in which the material is affixed to the vehicle. Current fixing devices are essentially of a bespoke nature, involving a skilled fitter fabricating suitable metalwork on site for the particular vehicle being worked on. Furthermore, once fitted, the flaps are to all intents and purposes fixed in position which can lead to difficulties when the wheel has to be removed, for example after a puncture, since the valance in particular is often in the way.

The present invention seeks to alleviate these problems by providing a universal modular device which can be fitted in a short time by unskilled labour. The invention is based on the fact that nearly all lorries and trailers include cross bearer beams which support the load-carrying part of the vehicle. These beams extend transversely across the chassis of the lorry underneath the load carrying part and are spaced apart by an amount dependent upon the vehicle concerned. The road wheels, which are generally positioned beneath the load-carrying part are therefore generally positioned beneath the ends of one or more of these beams. A typical distance (pitch) between adjacent beams is 1 metre.

According to the invention the fixing device comprises a frame to which spray suppression flaps may be fitted and at least two clamping means for clamping said frame to a respective one of at least two cross bearer beams beneath a road vehicle, said clamping means being slidably mounted with respect to the frame to enable the frame to be attached to beams of different pitch. In an embodiment, the frame is rectangular and has means for fitting the valance on one long side and means for fitting a rear flap on one short side. If the frame is supplied to the user already fitted with flaps, it will be seen that it is a simple job to fit the flaps merely by offering the frame up to the lorry and sliding the clamping means so that they are suitably positioned to be clamped onto the available beams, and thence inserting the frame over the wheel and completing the clamping. With a suitable clamping means, no specialist tools will be needed, and the operation can be carried out quickly by unskilled labour.

In a preferred embodiment of the invention the clamping means is fabricated in such a way that it can be partly released to allow the frame to slide along the beams - i.e. in a direction parallel to the axle - thus allowing the flap arrangement to be pulled forward in order to enable the wheel to be removed without fouling the valance. In an alternative embodiment the valance is pivotted in relation to the frame in such a way that it can be swung out of the way to enable removal of the road wheel without the need to move the frame. This greatly facilitates removal of the wheel during a roadside repair and also avoids the problem of incorrect replacement of the frame by, say, the driver of the vehicle. Preferably the pivotal axis of the valance is parallel to the outside side of the frame - i.e. at right angles to the axis of rotation of the wheel. Preferably also the equipment includes stop means for preventing the valance pivotting inwards (i.e. towards the wheel) beyond the approximately vertical position.

The clamping means can take various forms: in one embodiment two arms are provided, these arms extending upwardly from the frame and being suitably shaped to accord with the particular beam section in use, and wherein means are provided for drawing said arms together. Further means are provided for drawing the arms downwards so that they clamp the beam to the frame. In a preferred embodiment, each clamping means is mounted on a respective member itself slidably mounted on said frame.   Means are provided for clamping the member with respect to the frame and in the preferred embodiment this is achieved by means of a pair of wedges, one of which is attached to the member, and which are caused to slide over one another as the aforsaid arms are being drawn together.

If the frame is of rectangular shape, as mentioned above, the member may take the form of a cross-piece slidably mounted on the long sides so as to move backwards and forwards yet maintaining an orientation approximately parallel to the short sides.   Each clamping means is preferably mounted  on the member close to its end which is slidable along that long side of the rectangular frame which mounts the valance - i.e. the outer side of the frame, when fitted.   The other end of the member - that close to the inner side of the frame when fitted - may be fitted with a hook means whereby the inner side of the frame is supported on the beam but is slidable therealong, but is preferably provided with a further clamping means similar to the first-mentioned clamping means whereby the inner side of the frame may be securely clamped to the beam.   It will be seen that, in this arrangement, a total of four clamping members are provided, two being mounted on each cross member.

In order that the invention may be better understood, an embodiment thereof will now be described by way of example only and with reference to Figures 2 to 12 of the accompanying drawings in which:-

Figure 2 is a diagrammatic plan view of the fixing device of the invention;

Figure 3 is a diagrammatic perspective view showing the device in relation to adjacent parts of a lorry or trailer;

Figures 4, 5 and 6 are end, side and top elevations respectively of one of the clamping means forming part of the fixing device of Figures 2 and 3;

Figure 7 is a diagrammatic plan view of the wedge arrangement used to clamp the cross members forming part of the fixing device of Figures 2 and 3;

Figure 8 is a diagrammatic end view of the fixing device of the invention, showing a variant for an angled valance;

Figures 9 and 10 are views similar to Figure 4, but showing modifications necessary for alternative beam sections;

Figure 11 is a diagrammatic plan view of the fixing device of the invention showing an alternative embodiment; and

Figure 12 is a partial side view showing the method of pivotting the valance in the fixing device of Figure 11.

Referring firstly to Figures 1 and 2, the fixing device of the invention comprises a rectangular frame 5 made of steel section - steel angle is shown in the drawings, but other sections could be used. The components of the frame are welded together. The two long sides 6,7 are attached to the right hand (front) short side 8 by mitre or similar joints, as indicated; the left hand (rear) short side 9 is butt-welded to the cut-off ends of the sides 6,7 in such a way that the vertical flange of the angle section is butted to the ends of the sides 6,7. A plurality of holes 10 are formed in this vertical flange to enable attachment of a resilient flap such as flap 2 (Figure 1). The vertical flange of side 7 is similarly formed with holes 11 to enable attachment of a valance 3. A short length 29 of angle iron extends downwards from that corner of the frame where the flap 2 and valance 3 meet in order to protect same and to ensure that there is no gap between the two. In an alternative arrangement, shown in Figure 8, the length 29 is angled outwards and the once-vertical flange of side 7 is also angled to provide an angled valance.    In this case the upper corner of the flap 2 is appropriately mitred, as shown.

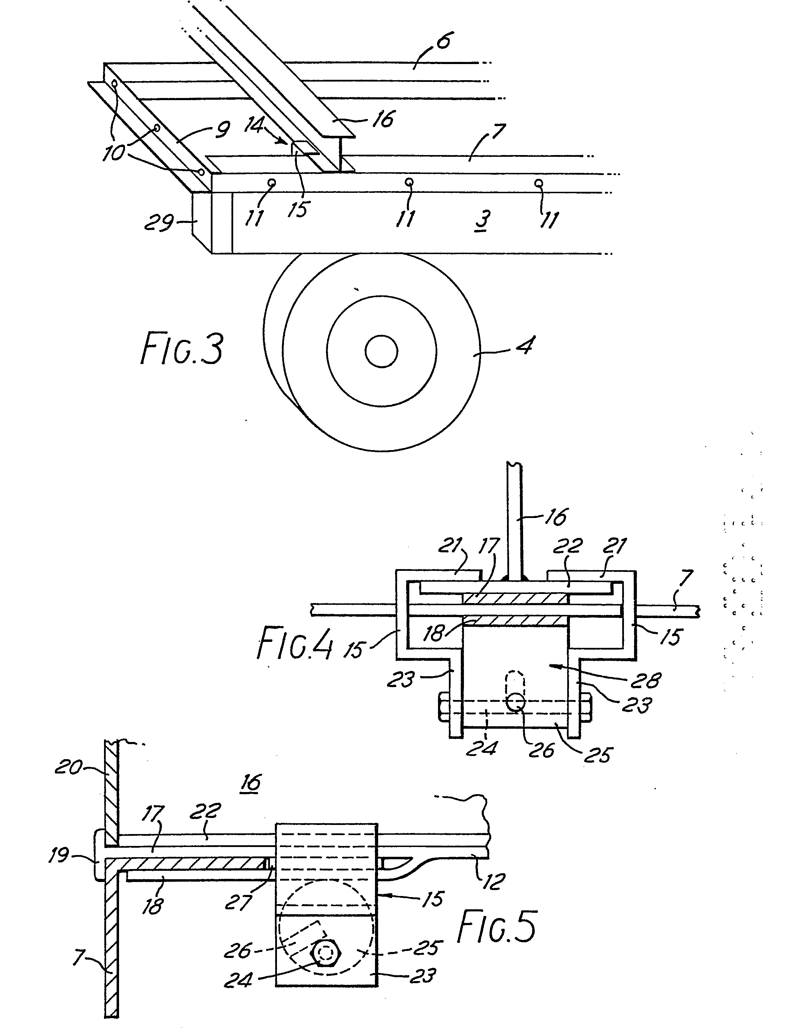

Slidably mounted on the inwardly-facing horizontal flanges of sides 6 and 7 are identical cross members 12,13.    Cross members 12,13 each mount a pair of clamping mechanisms 14 which permit the cross members to be securely clamped to the frame.    Each clamping mechanism includes a pair of arms 15 which hook over the lower flange of an I-beam 16 which forms part of the lorry or trailer to which the frame is to be attached.    The I-beam 16 is one of a plurality which extend across the underside of the lorry or trailer.    The distance between these beams - known as the pitch - varies from lorry to lorry but is typically about 1 m.    When fitting the frame 5 to a lorry, the cross members 12 and 13 can be moved backwards and forwards to enable the arms 15 to engage two suitably-positioned beams.    When in position each cross member 12,13 lies directly beneath the beam to which it is clamped and all four clamping mechanisms are tightened to give a secure 4-point mounting for the frame on the vehicle.    The position of the vehicle road wheel is illustrated diagrammatically in Figure 3 under reference 4.

The construction of each clamping mechanism will now be described with reference to Figures 4 to 7. Although all the clamping mechanisms are identical, for convenience that clamping the cross member 12 to the side 7 will be described by way of example.

As will be clear from Figure 5, the end of cross member 12 splits into two spaced bars 17,18 which extend respectively above and below the horizontal flange of the side 7 in such a way as to allow sliding movement between the member 12 and side 7 in the manner described previously.    The bar 18 ends just short of the internal corner of the angle; the bar 17 is finished in a T-section end cap 19 which acts to locate the frame with respect to the lorry trailer when fitted. Figure 5 also shows, under reference 20, the strip which is often fixed across the ends of the beams 16 to hide same from view.

The clamping mechanism itself comprises the aforsaid arms 15 whose upper ends 21 are bent over so that they locate over the lower flange 22 of beam 16. The lower ends 23 of arms 15 are attached together by a nut and bolt 24 which, when tight, clamps the arms 15 about a circular cylindrical block 25. The block 25 is rotatably mounted about bolt 24 (when loose) and will thus be seen to define an eccentric cam. A blind bore 26 is formed in the block to enable the block to be rotated about bolt 24 during fitting by means of a simple rod-like tool.

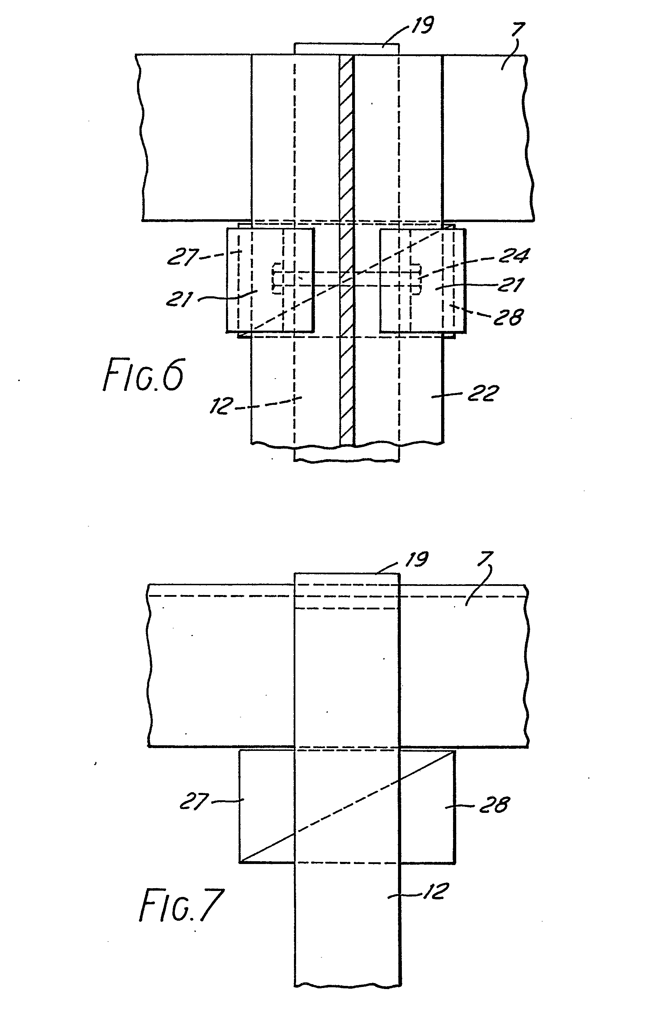

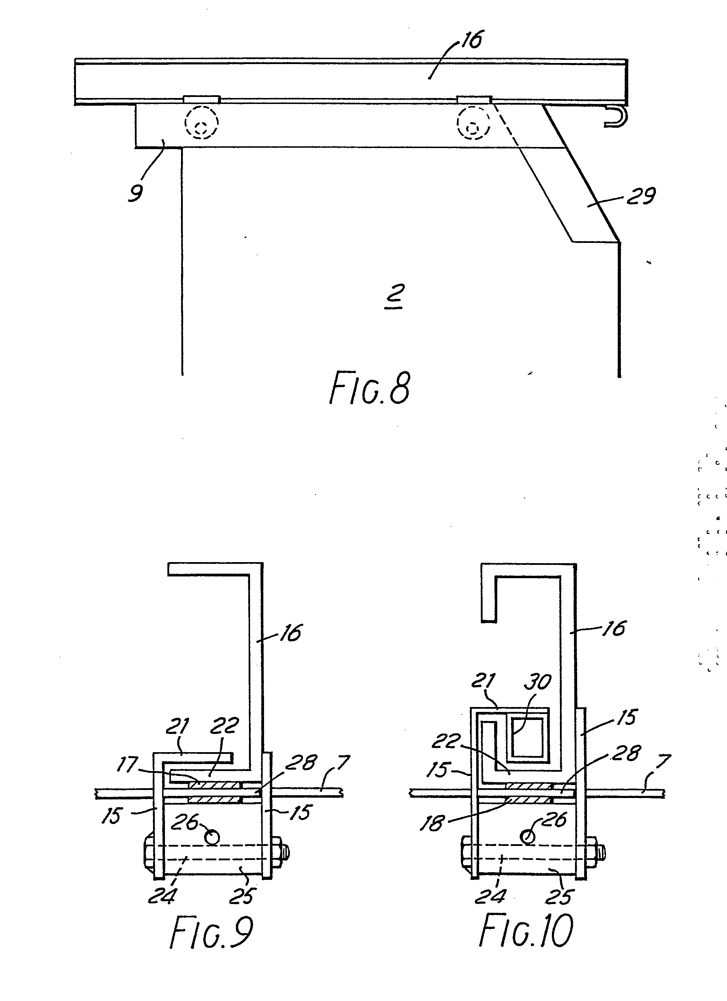

Sandwiched between the bars 17,18 are a pair of wedge members 27,28 which are most clearly shown in Figure 7, but are also shown in outline in Figure 6. The wedge 28 is attached to the cross member 12, for example by welding; the wedge 27 is free to move within the confines of the remaining components of the clamping mechanism.

In order to fit the frame to a vehicle, the bolt 24 of each clamping mechanism is loosened sufficiently for the inwardly-facing ends 21 of the arms 15 to be withdrawn to enable them to be fitted over the bottom flange 22 of the beam 16. At this stage, the cross members 12,13 are free to slide and are thus adjusted by the fitter to approximately correspond with two suitably positioned beams, as described above. Fine adjustment of the front - back position of the frame relative to the wheel can still be made after the ends 21 of the arms 15 are fitted over the lower flanges 22 of the chosen beams. The bolt 24 is now tightened to be a finger-tight fit which acts to move the two wedge members 27,28 towards one another which in turn has the effect, bearing in mind that the wedge member 28 is secured to the cross member 12, of forcing the wedge member 27 against the edge of the horizontal flange of side 7 to ensure the correct location of the arms 12,13 relative to the sides 6,7 of the frame and further ensure (after final clamping) that no twisting or skewing movement of the frame can take place in use. Just before final tightening a tool is inserted in blind bore 26 and the block 25 rotated in such a way that its cam action will cause the top of the block to bear against the underside of arm 18, thus drawing the arms 15 downwards and causing the ends 21 of the arms to securely clamp between themselves and the top of the block the flange 22 of the beam 16, the wedge members 27,28 and the bars 17,18.

Tightening of the bolt acts to clamp the whole assembly together, with the horizontal flange of sides 6 and 7 clamped between the bars 17 and 18 and with the cross member 12/13 clamped to the appropriate beam 16.

Figures 9 and 10 are similar to Figure 4 and show the modifications necessary to enable the device to be used with the other two most common sections of beam 16. In the U-channel beam of Figure 9, one of the arms 15 does not have a bent over-upper end, but merely continues upwards to about the same level as the bent-over end 21 of the other arm. The C-channel beam of Figure 10 is similar, but additionally incorporates a length of box-section beam 30 attached to end 21 to act as a spacer member to clear the lip of the beam. In both cases, rotation of the block 25 causes the one bent-over end 21 to be drawn against the beam to clamp the assembly together.

The frame may be fitted either with or without the flaps in place, but it will be seen that, either way, fitting is quick and simple and involves no difficult welding or machining operations, neither does it require specialist tools, or special compressed air or electrical supplies. The device is universal in the sense that it will fit a wide range of vehicles of the type having cross bearer beams. In the event of a wheel change, the device can readily be loosened and slid outwards a short way in the direction of the axle in order to allow the wheel to clear the valance. Refitting is simply the reverse procedure. It will be seen that the type of construction in which the valance is angled outwards can also be readily accommodated simply by appropriate angling of the vertical flange of side 7, or by fitting a bar of alternative section - for example Z-section.

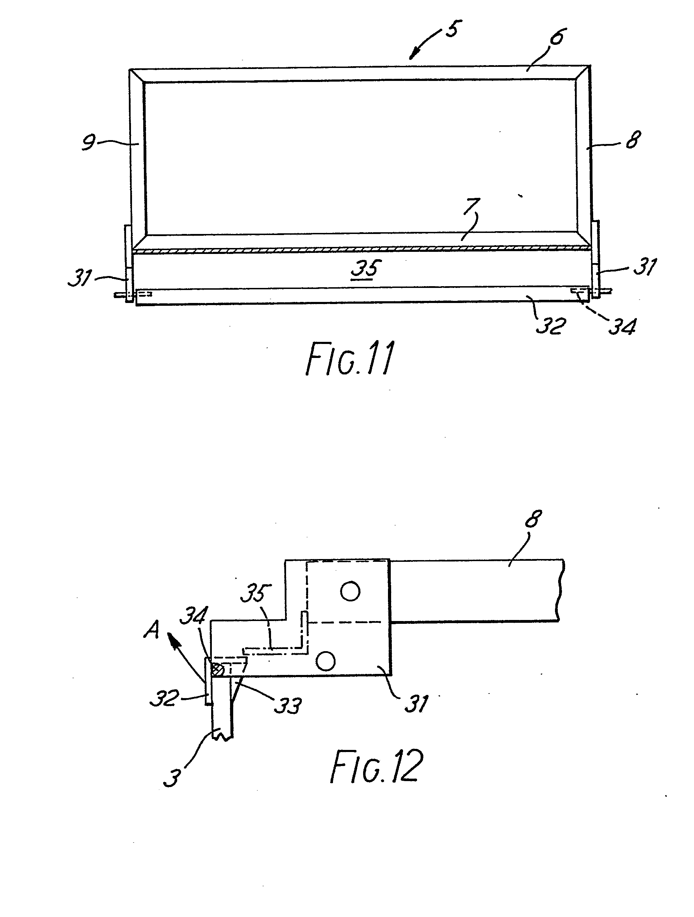

In an alternative construction, shown in Figures 11 and 12 the valance is pivotted with respect to the frame, thus enabling the road wheel to be readily removed without the necessity for moving the whole frame. Figures 11 and 12 have been simplified for clarity in that they do not show the fixing arrangement, described above, whereby the frame is attached to the vehicle. Figure 11 may, for example, be compared with Figure 2; however, where appropriate, the same reference numerals will be used to illustrate equivalent parts. Referring to Figures 11 and 12, it will be seen that, attached to the front end of each of the sides 8, 9 of the frame 5, are support plates 31. These plates may be of steel and welded to the frame, but other alternatives are possible. Rotatably mounted between the plates 31 is a bar 32 which is conveniently of right-angle section as shown. The bar may be made of steel, or a lighter material such as aluminium or plastics, and serves to support at its vertical side the valance 3. The valance may be attached to the bar 32 by bolts, as previously or by spaced webs, one of which is shown in outline under the reference 33 in Figure 12. These webs are attached to the horizontal side of bar 32 and are spaced from the vertical side by an amount sufficient to enable the valance to be pushed into the gap between them so as to be retained thereby.

The bar 32 is pivotted about an axis parallel to side 7 by means of a pair of pins 34 which rotate in respective apertures in the plates 31.

Between the bar 32 and the side 7 of the frame is a filler piece 35 in the form of an L-section length of steel or lighter material such as aluminium or plastics. The filler piece is attached, for example by bolting or welding to the side 7 and extends the full length of the frame thus filling the gap between the front edge of the frame and the valance. As well as preventing emergence of spray at this point, the filler piece also acts as a stop to prevent inwards pivotting of the bar 32 and attached valance, to thus prevent the valance fouling the road wheel (not shown).

It will be seen that the valance normally hangs vertically, thus doing its job of spray suppression, but can readily be swung outwards, in the direction of arrow A to enable removal of the road wheel without disturbing the frame.

CLAIMS

1.      A fixing device for vehicle spray suppression equipment, said device comprising a frame to which spray suppression flaps may be fitted and at least two clamping means for clamping said frame to a respective one of at least two cross bearer beams beneath a road vehicle, said clamping means being slidably mounted with respect to the frame to enable the frame to be attached to beams of different pitch.

2.      A fixing device as claimed in claim 1 wherein each said clamping means comprises two arms extending upwardly from the frame and being suitably shaped so that they co-operate to engage the particular beam section of the vehicle, first means for drawing said arms together, and second means for drawing said arms downwards so that they clamp the frame to the beam.

3.      A fixing device as claimed in either one of claims 1 or 2 wherein each said clamping means is mounted on a respective member itself slidably mounted on said frame.

4.      A fixing device as claimed in claim 3 further comprising means for clamping said member with respect to the frame.

5.      A fixing device as claimed in claims 2 and 4 wherein the means for clamping said member comprises a pair of wedges, one attached to the member, and which are caused to slide over one another as the arms are being drawn together.

6.      A fixing device as claimed in any one of the preceding claims wherein the frame is rectangular and has means for fitting the valance on one long side and means for fitting a rear flap on one short side.

7.      A fixing device as claimed in claim 6 and any one of claims 3, 4 or 5 wherein each said member takes the form of a cross-piece slidably mounted at its ends in the long sides of the frame so as to move backwards and forwards yet maintaining an orientation approximately parallel to the short sides of the frame and wherein at least one clamping means is mounted on each such cross-piece, adjacent one end thereof.

8. A fixing device as claimed in either one of claims 6 or 7 including means for pivotally mounting said valance with respect to the frame.

9. A fixing device as claimed in claim 8 further including stop means operable to prevent pivotting of the valance inwards - i.e. towards the wheel when the device is fitted - beyond the approximately vertical position.

*FIG.1*

*FIG.2*

FIG.3

FIG.4

FIG.5

0194806

FIG.6

FIG.7

0194806

FIG.8

FIG.9

FIG.10

0194806

FIG.11

FIG.12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CA-A-1 159 495 (McKENZIE) | | B 62 D 25/16 |
| A | US-A-4 445 700 (SCHROEDER) | | |
| A | US-A-3 877 722 (CONNER) | | |

TECHNICAL FIELDS SEARCHED (Int. Cl.4)

B 62 D

The present search report has been drawn up for all claims

| Place of search | Date of completion of the search | Examiner |
|---|---|---|
| THE HAGUE | 11-06-1986 | SCHMITTER J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82